# EUROPÄISCHE PATENTSCHRIFT

(11) **EP 0 904 483 B1**
(45) Veröffentlichungstag und Bekanntmachung des Hinweises auf die Patenterteilung: **17.11.1999**
(21) Anmeldenummer: 97925981.9
(22) Anmeldetag: 04.06.1997
(51) Int. Cl.: F02B 47/08, B60H 1/02, F02G 5/02

(54) **KRAFTFAHRZEUG MIT EINER BRENNKRAFTMASCHINE MIT ÄUSSERER ABGASRÜCKFÜHRUNG UND HEIZVORRICHTUNG**
MOTOR VEHICLE WITH AN INTERNAL COMBUSTION ENGINE WITH EXTERNAL EXHAUST GAS RECIRCULATION SYSTEM AND HEATER
VEHICULE AUTOMOBILE A MOTEUR A COMBUSTION INTERNE AVEC RECYCLAGE EXTERNE DES GAZ D'ECHAPPEMENT ET DISPOSITIF DE CHAUFFAGE

(30) Priorität: 13.06.1996 DE 19623573
(43) Veröffentlichungstag der Anmeldung: 31.03.1999
(73) Patentinhaber: Volkswagen Aktiengesellschaft, 38436 Wolfsburg (DE)
(72) Erfinder: KUHN, Wilhelm, D-38154 Königslutter (DE)
(86) Internationale Anmeldenummer: EP9702901
(87) Internationale Veröffentlichungsnummer: WO9747865

(56) Entgegenhaltungen:
- EP-A- 0 058 842
- DE-C- 4 422 966
- FR-A- 2 648 087
- FR-A- 2 718 491

## Beschreibung

Die Erfindung betrifft ein Kraftfahrzeug mit einer Brennkraftmaschine mit äußerer Abgasrückführung in Form einer eine Abgasleitung mit einem Ansaugrohr verbindenden Abgasrückführleitung, mit einem Fahrgastinnenraum mit einer Heizvorrichtung mit einem Heizkreislauf eines flüssigen Wärmetransportmediums.

Kraftfahrzeuge werden üblicher Weise durch Brennkraftmaschinen angetrieben. Bekannte Brennkraftmaschinen sind Kolbenmaschinen, deren intermittierende Arbeitsweise dazu führt, daß die Verbrennungsprozesse nicht optimal ablaufen. Als Folge entstehen neben den unschädlichen Verbrennungsprodukten Wasser und Kohlendioxid beträchtliche Mengen an Schadstoffen. Zu den wichtigsten Schadstoffen von Brennkraftmaschinen, die zusammen mit dem Abgas an die Umwelt abgegeben werden, zählen Stickoxide (NO_{X}). Die Bildung von Stickoxiden ist maßgeblich von der Verbrennungs-Spitzentemperatur abhängig. Um die Verbrennungs-Spitzentemperatur zu senken, sind verschiedene Brennkraftmaschinen mit einer Abgasrückführung als temperatursenkenden Maßnahme ausgestattet. Bei der äußeren Abgasrückführung ist eine Abgasrückführleitung vorgesehen, die den Abgaskrümmer (die Abgasleitung) der Brennkraftmaschine mit dem Ansaugkrümmer (dem Ansaugrohr) verbindet. Ein Teil der beim Auspufftakt vom Kolben aus dem Verbrennungsraum verdrängten Abgase wird über diese Abgasrückführleitung beim nachfolgenden Ansaugtakt zusammen mit Kraftstoff-Luftgemisch (beim Otto-Motor) oder Verbrennungsluft (beim Diesel-Motor) wieder zurückgeführt.

Der Anteil an rückgeführtem Abgas an der Zylinderfüllung kann nicht beliebig erhöht werden, da bei zu mageren Gemischen die Kohlenwasserstoff-Emissionen ansteigen.

Ein anderer Weg, die Schadstoff-Emissionen von Brennkraftmaschinen zu senken, ist es, den spezifischen Verbrauch zu senken. Insbesondere moderne direkt einspritzende Diesel-Motoren erreichen dabei so gute Wirkungsgrade, daß Fahrzeugmotoren durchschnittlicher Größe bei dieser Bauweise im Teillastbereich häufig nicht mehr genug Verlustwärme produzieren, um den Fahrgastinnenraum des Kraftfahrzeuges bei niedrigen Außentemperaturen ausreichend heizen zu können.

Es sind daher elektrische Zusatzheizungen bekannt geworden, die bei ungünstigen Betriebsbedingungen, d.h. Warmlaufen der Brennkraftmaschine und niedriger Außentemperaturen, beispielsweise das zur Heizung verwendete Kühlwasser der Brennkraftmaschine zusätzlich aufheizen und Leistungen zwischen zirka 500 W und 1 kW bereitstellen. Der mit solchen elektrischen Zusatzheizungen verbundene Aufwand umfaßt insbesondere auch größere Generatoren (Lichtmaschinen), so daß neben den Fertigungskosten auch das Fahrzeuggewicht unerwünscht ansteigt, was den primären Zielsetzungen, niedrige spezifische Verbräuche zu erreichen, zuwider läuft.

Es sind auch spezielle im Abgasstrang angeordnete Wärmetauscher bekannt geworden, beispielsweise aus der DE-PS 31 03 198 C2, um zusätzliche Heizleistung bereitzustellen. Solche Wärmetauscher entziehen dem Abgas zwar Wärme, jedoch an einer Stelle im Abgasstrang, bei der ein positiver Effekt auf die Verbrennungs-Spitzentemperatur und damit eine Senkung der Stickoxid-Emissionen nicht möglich ist.

Der Erfindung liegt daher die Aufgabe zugrunde, das Schadstoffverhalten einer gattungsgemäßen Brennkraftmaschine weiter zu verbessern und andererseits bei Brennkraftmaschinen mit hohem Wirkungsgrad den Bedarf an Zusatzheizungen zu verringern oder überflüssig zu machen.

Die Lösung der Aufgabe ist bei einem gattungsgemäßen Kraftfahrzeug mit einer Brennkraftmaschine mit äußerer Abgasrückführung und einer Heizvorrichtung für den Fahrgastinnenraum durch eine Wärmetauschereinrichtung, mittels der Wärme von dem durch die Abgasrückführungsleitung rückgeführten Abgas der Heizvorrichtung zuführbar ist, wobei die Wärme zwischen der Brennkraftmaschine und der Heizvorrichtung direkt oder indirekt in den Heizkreislauf einspeisbar ist, gekennzeichnet.

Durch die erfindungsgemäße Anordnung eines Wärmetauschers in der Abgasrückführleitung werden einerseits die rückgeführten Abgase gekühlt, so daß die Verbrennungs-Spitzentemperatur und damit die Stickoxid-Emissionen gesenkt werden können, ohne daß sich die negativen Folgen eines zu hohen Anteils an rückgeführten Abgas ergeben, andererseits kann auf konstruktiv einfache Weise eine Zusatzheizleistung bereitgestellt werden, die bei Brennkraftmaschinen der Leistung, wie sie üblicher Weise für Kraftfahrzeuge verwendet werden, im Bereich von 500 W bis 1 kW liegen kann.

Der so erzielte Doppelnutzen ist mit konstruktiv einfachen Mitteln zu erreichen, wobei die Fertigungskosten eines erfindungsgemäßen Kraftfahrzeuges gegenüber einem mit elektrischen Zusatzheizungen oder anderen zusätzlichen Heizungen ausgestatteten, ansonsten vergleichbaren Kraftfahrzeug sinken können.

Weitere bevorzugte Ausführungsformen der Erfindung sind in den Unteransprüchen beschrieben.

Bevorzugt ist insbesondere vorgesehen, daß bei einer Brennkraftmaschine mit einem Kühlmittelkreislauf (wassergekühlter Motor) der erfindungsgemäße Wärmetauscher der Abgasrückführleitung in den Kühlkreislauf integrierbar ist, so daß die aus dem rückgeführten Abgas aufgenommene Wärme auch bei abgeschalteter Heizvorrichtung das Kühlmittel der Brennkraftmaschine aufheizt, um eine Kühlung des rückgeführten Abgases auch bei Nichtgebrauch der Heizung zu erreichen. Wenn der Heizungswärmetauscher stets vom Kühlmittel durchflossen wird, kann der Wärmetauscher auch direkt in dem Heizkreislauf eingebunden sein.

Ist in der Abgasrückführleitung ein Ventil angeordnet, wie es an sich bekannt ist, so ergibt sich als weiterer Vorteil der Erfindung, daß der bei einem wassergekühlten Motor vorzusehene Kühler für den Kühlmittelkreislauf nicht größer dimensioniert werden muß, als dies bisher vorgesehen war, da die Abgasrückführleitung bzw. die Abgasrückführung bei Vollast der Brennkraftmaschine durch das Ventil gesperrt werden kann.

Die Erfindung wird im folgenden anhand eines in der Zeichnung dargestellten Ausführungsbeispieles näher beschrieben. In der Zeichnung zeigten:
- Figur 1 -: eine schematische Darstellung einer Brennkraftmaschine mit den für die Erfindung wesentlichen Bauteilen, wobei der erfindungsgemäße Wärmetauscher in Serie mit dem die Brennkraftmaschine durchfließenden Kühlmittelstrom geschaltet ist, und
- Figur 2 -: eine alternative Ausführungsform, bei der der erfindungsgemäße Wärmetauscher parallel zu dem die Brennkraftmaschine durchfließenden Kühlmittelstrom geschaltet ist.

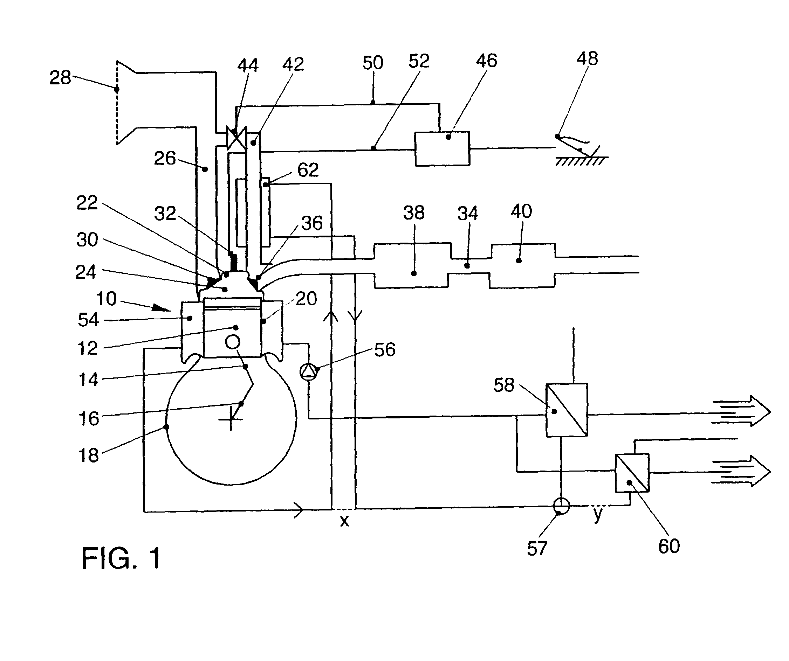

In Figur 1 ist eine Brennkraftmaschine 10 im Querschnitt in schematischer Weise dargestellt. Ein Kolben 12 wirkt in an sich bekannter Weise über ein Pleuel 14 auf die Kurbel 16 an einer am Kurbelgehäuse 18 drehbar gelagerten Kurbelwelle. Der Kolben 12 gleitet in einem Zylinder 20, der durch einen Zylinderkopf 22 abgeschlossen wird. Der Verbrennungsraum 24 kann über ein Ansaugrohr 26 und einen Luftfilter 28 mit Verbrennungsluft beschickt werden, wenn sich der Kolben 12 im Ansaugtakt nach unten bewegt. Ein durch einen nicht dargestellten Ventiltrieb betätigtes Einlaßventil 30 schließt oder öffnet den Ansaugtrakt 26/28 in an sich bekannter Weise.

Bei der als direkt einspritzendem Diesel-Motor ausgebildeten Brennkraftmaschine dient ein Einspritzventil 32 der Einspritzung des Kraftstoffes und damit auch der Leistungsregelung.

Eine Abgasleitung 34 nimmt in bekannter Weise während des Auspufftaktes bei geöffneten Auslaßventil 36 die Abgase auf. In der Abgasleitung 34 sind ein Katalysator 38 und ein Schalldämpfer 40 angeordnet.

Eine Abgasrückführleitung 42 leitet einen Teil der bei geöffnetem Auslaßventil 36 in die Abgasleitung 34 geschobenen Abgase in das Ansaugrohr 26. Voraussetzung ist, daß ein in der Abgasrückführleitung 42 angeordnetes Ventil 44 geöffnet ist. Das Ventil 44 wird von einem Motorsteuergerät 46 im vollastnahen Kennfeldbereich geschlossen. Über entsprechende Signalleitungen 50 und 52 wird einerseits das in der Abgasrückführleitung 42 angeordnete Ventil 44 bei Vollastbetrieb geschlossen, andererseits wird die über das Einspritzventil 32 eingespritzte Brennstoffmenge bis nahe an die Rußgrenze erhöht.

Zur Abfuhr der Verlustwärme bzw. Kühlung ist der Zylinder 20 der Brennkraftmaschine 10 von einem Wassermantel 54 umgeben. Das Wasser bzw. das Kühlmittel im Mantel 54 fließt durch einen Kühlmittelkreislauf und wird durch eine Pumpe 56 umgewälzt. Das Kühlmittel fließt über ein Thermostatventil 57 durch einen Hauptkühler 58, in dem die aufgenommene Wärme fahrtwindbedingt an die Umwelt abgegeben wird. Das Thermostatventil 57 trennt bei kalten Kühlmittel den Hauptkühler 58 von dem Kühlmittelkreislauf bzw. schließt ihn bei heißem Kühlmittel in den Kühlmittelkreislauf mit ein.

Um den Fahrgastinnenraum beheizen zu können, ist ein zusätzlicher Wärmetauscher 60 vorgesehen, in dem Wärme an die dem Fahrgastinnenraum zugeführte Luft abgegeben wird. Dieser zusätzliche Wärmetauscher 60 ist stets in den Kühlmittelkreislauf einbezogen.

Erfindungsgemäß ist die Abgasrückführleitung 42 doppelwandig ausgebildet, so daß ein Wärmetauscher 62 gebildet wird. Dieser wird, wie sich aus den die Flußrichtung symbolisierenden Pfeilen der Anschlußleitungen ergibt, im Gegenstromverfahren von dem durch die Pumpe 56 geförderten Kühlmittel durchströmt.

Im Teillastbetrieb, d.h. bei geöffnetem Ventil 44, wird daher dem Kühlmittelkreislauf 54/56 durch den parallel geschalteten Wärmetauscher 62 der Abgasrückführleitung zusätzliche Leistung zugeführt, die in dem zum Betrieb der Heizvorrichtung vorgesehenen Wärmetauscher 60 an den Fahrgastinnenraum abgeführt werden kann. Zusätzlich werden die durch die Abgasrückführleitung 42 strömenden, durch das Ansaugrohr 26 rückgeführten Abgase gekühlt, so daß die Verbrennungs-Spitzentemperatur abgesenkt und die NO_{X}-Emissionen reduziert werden.

Die in Figur 1 gezeigte Serienschaltung des Wärmetauschers 62 mit dem durch den Wassermantel 54 fließenden Kühlmittelstrom bietet den Vorteil, daß die bei herkömmlichen Konstruktionen von Brennkraftmaschinen direkt am Motorgehäuse angeflanschte Kühlmittelpumpe 56 hinsichtlich ihrer Anschlüsse unverändert übernommen werden kann. Wie in Figur 1 dargestellt, kann der Wärmetauscher 62 entweder an der Stelle X in den Kühlmittelkreislauf eingefügt werden, was den Vorteil hat, daß bei nicht betriebener Heizung eine Kühlung der Abgase weiterhin stattfindet, da das Kühlmittel durch den Hauptkühler 58 strömt. Alternativ kann vorgesehen sein, den erfindungsgemäßen zusätzlichen Wärmetauscher 62 an der Stelle Y anzuordnen, was den Vorteil bietet, daß die über den Wärmetauscher 62 gewonnene zusätzliche Heizleistung unmittelbar und ausschließlich dem Wärmetauscher der Heizvorrichtung 60 zugeführt wird. Damit wird die anfänglich zur Verfügung stehende Heizleistung erhöht, jedoch ist eine Kühlung der Abgase und die damit verbundenen vorteilhaften Einflüsse dann nicht möglich, wenn die Heizung nicht betrieben wird, mit dem Nachteil daß sich Dampfblasen im Wärmetauscher 62 bilden können.

Die Schaltung gemäß Figur 1 bietet den Vorteil, bereits bestehende Konstruktionen von Kühlmittelpumpen unverändert übernehmen zu können. Nachteilig ist jedoch, daß der erfindungsgemäße Wärmetauscher 62 von Kühlmittel durchströmt wird, das bereits die Abwärme des Motors im Wassermantel 54 aufgenommen hat und demgemäß eine erhöhte Temperatur aufweist.

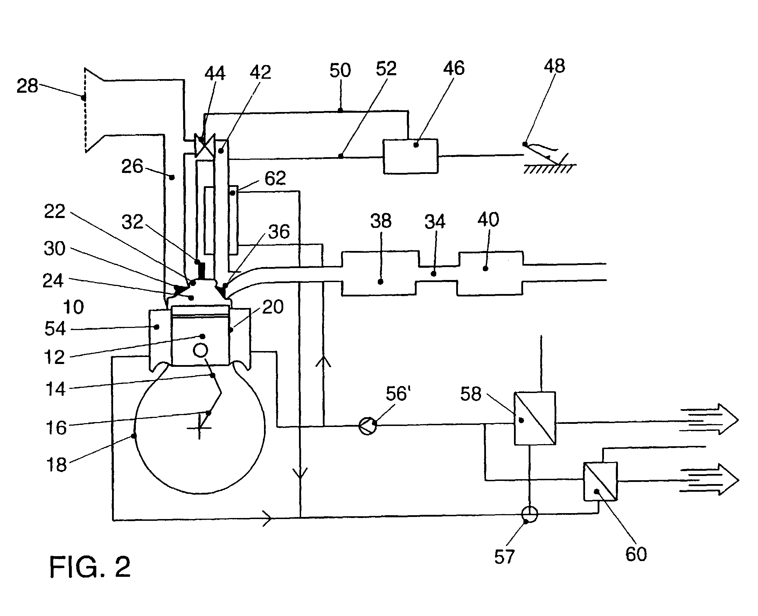

Alternativ kann vorgesehen sein, wie in Figur 2 dargestellt, den Wärmetauscher 62 parallel zu dem Wassermantel 54 zu schalten, so daß der Wärmetauscher 62 von Kühlmittel durchflossen wird, das den Hauptkühler 58 durchlaufen hat und dementsprechend kälter ist, als das den Wassermantel 54 verlassende Kühlmittel. Dementsprechend besteht eine höhere Temperaturdifferenz zwischen dem den zusätzlichen Wärmetauscher 62 durchfließenden Kühlmittel und den Abgasen, so daß die übertragene Wärmemenge, die der Heizvorrichtung 60 zugeführt werden kann, erhöht wird. Erforderlich ist hierfür jedoch, daß die Wasserpumpe bzw. Kühlmittelpumpe 56 konstruktiv so ausgelegt wird (56'), daß eine Teilung des von ihr geförderten Kühlmittelstromes in einen den Abgaswärmetauscher 62 durchfließenden Teilstrom und einen den Wassermantel 54 der Brennkraftmaschine 10 durchfließenden Teilstrom ermöglicht wird.

### Bezugszeichenliste

- 10: Brennkraftmaschine
- 12: Kolben
- 14: Pleuel
- 16: Kröpfung (Kurbel)
- 18: Kurbelgehäuse
- 20: Zylinder
- 22: Zylinderkopf
- 24: Verbrennungsraum
- 26: Ansaugrohr
- 28: Luftfilter
- 30: Einlaßventil
- 32: Einspritzventil
- 34: Abgasleitung
- 36: Auslaßventil
- 38: Katalysator
- 40: Schalldämpfer
- 42: Abgasrückführleitung
- 44: Ventil (in 42)
- 46: Motorsteuergerät
- 48: Fahrpedal
- 50: Steuerleitung
- 52: Steuerleitung
- 54: Wassermantel (Kühlmittel-Mantel)
- 56: Pumpe
- 57: Thermostatventil
- 58: Hauptkühler
- 60: Wärmetauscher der Heizvorrichtung
- 62: Wärmetauscher (von 42)

## Patentansprüche

1. Kraftfahrzeug mit einer Brennkraftmaschine (10) mit äußerer Abgasrückführung in Form einer eine Abgasleitung mit einem Ansaugrohr (26) verbindenden Abgasrückführleitung (42), mit einem Fahrgastinnenraum mit einer Heizvorrichtung (60) mit einem Heizkreislauf eines flüssigen Wärmetransportmediums, **gekennzeichnet,** durch eine Wärmetauschereinrichtung, mittels der Wärme von dem durch die Abgasrückführungsleitung (42) rückgeführten Abgas der Heizvorrichtung (60) zuführbar ist, wobei die Wärme nach der Brennkraftmaschine (10) und vor der Heizvorrichtung (60) direkt oder indirekt in den Heizkreislauf einspeisbar ist.

2. Kraftfahrzeug nach Anspruch 1, **dadurch gekennzeichnet,** daß die Wärmetauschereinrichtung einen Wärmetauscher (62) beinhaltet, der von dem rückgeführten Abgas durchströmbar ist.

3. Kraftfahrzeug nach Anspruch 2, **dadurch gekennzeichnet,** daß der Wärmetauscher (62) direkt von dem Wärmetransportmedium des Heizkreislaufs durchströmbar ist.

4. Kraftfahrzeug nach Anspruch 2 oder 3, **dadurch gekennzeichnet,** daß die Brennkraftmaschine (10) einen Kühlmittelkreislauf aufweist, und daß der Wärmetauscher (62) in den Kühlkreislauf integrierbar (x, 57) ist.

5. Kraftfahrzeug nach einem der Ansprüche 2 bis 4, **dadurch gekennzeichnet,** daß in der Abgasrückführleitung (42) ein Ventil (44) angeordnet ist und der Wärmetauscher zwischen Abgasleitung (34) und Ventil (44) angeordnet ist.

6. Kraftfahrzeug nach einem der Ansprüche 2 bis 4, **dadurch gekennzeichnet,** daß in der Abgasrückführleitung (42) ein Ventil (44) angeordnet ist und der Wärmetauscher zwischen Ventil und Ansaugrohr (26) angeordnet ist.

7. Kraftfahrzeug nach Anspruch 5 oder 6, **dadurch gekennzeichnet,** daß eine Motorsteuerung (46) das Ventil bei Vollast der Brennkraftmaschine (10) schließt.

8. Kraftfahrzeug nach einem der Ansprüche 2 bis 7, **dadurch gekennzeichnet,** daß der Wärmetauscher (62) im Gegenstromverfahren durchspült wird.

9. Kraftfahrzeug nach einem der vorhergehenden Ansprüche, dadurch gekennzeichnet, daß die Brennkraftmaschine (10) ein direkt einspritzender Diesel-Motor ist.

10. Kraftfahrzeug nach einem der vorgehenden Ansprüche, dadurch gekennzeichnet, daß die Wärme im wesentlichen vollständig in den Heizkreislauf einspeisbar ist.

11. Kraftfahrzeug nach einem der vorgehenden Ansprüche, dadurch gekennzeichnet, daß die Wärmetauschereinrichtung das der Brennkraftmaschine (10) zugeführte Wärmetransportmedium empfängt.

## Revendications

1. Véhicule à moteur avec un moteur à combustion interne (10) avec un recyclage extérieur des gaz d'échappement, se présentant sous la forme d'une conduite de recyclage des gaz d'échappement (42), qui relie une conduite de gaz d'échappement à un tuyau d'admission (26), avec un habitacle pour les passagers avec un dispositif de chauffage (60) avec un circuit de chauffage d'un agent liquide caloporteur, caractérisé par un dispositif échangeur de chaleur, au moyen duquel on peut amener de la chaleur au dispositif de chauffage (60) à partir des gaz d'échappement recyclés à travers la conduite de recyclage des gaz d'échappement (42), la chaleur pouvant être transférée dans le circuit de chauffage de façon directe ou indirecte après le moteur à combustion interne (10) et avant le dispositif de chauffage (60).

2. Véhicule à moteur selon la revendication 1, caractérisé en ce que le dispositif échangeur de chaleur contient un échangeur de chaleur (62), qui peut être traversé par les gaz d'échappement recyclés.

3. Véhicule à moteur selon la revendication 2, caractérisé en ce que l'échangeur de chaleur (62) peut être parcouru directement par l'agent caloporteur du circuit de chauffage.

4. Véhicule à moteur selon la revendication 2 ou 3, caractérisé en ce que le moteur à combustion interne (10) présente un circuit d'agent de refroidissement et en ce que l'échangeur de chaleur (62) peut être intégré dans le circuit de refroidissement (x, 57).

5. Véhicule à moteur selon l'une des revendications 2 à 4, caractérisé en ce que l'on dispose dans la conduite de recyclage des gaz d'échappement (42) une vanne (44) et l'on dispose l'échangeur de chaleur entre la conduite des gaz d'échappement (34) et la vanne (44).

6. Véhicule à moteur selon l'une des revendications 2 à 4, caractérisé en ce que l'on dispose dans la conduite de recyclage des gaz d'échappement (42) une vanne (44) et l'on dispose l'échangeur de chaleur entre la vanne (44) et le tuyau d'admission (26).

7. Véhicule à moteur selon la revendication 5 ou 6, caractérisé en ce qu'une commande motorisée (46) ferme la vanne quand le moteur à combustion interne (10) fonctionne à pleine charge.

8. Véhicule à moteur selon l'une des revendications 2 à 7, caractérisé en ce que l'échangeur de chaleur (62) est balayé dans un processus parcouru à contre-courant.

9. Véhicule à moteur selon l'une des revendications précédentes, caractérisé en ce que le moteur à combustion interne (10) est un moteur Diesel à injection directe.

10. Véhicule à moteur selon l'une des revendications précédentes, caractérisé en ce que la chaleur peut être transférée sensiblement complètement dans le circuit de chauffage.

11. Véhicule à moteur selon l'une des revendications précédentes, caractérisé en ce que le dispositif échangeur de chaleur reçoit l'agent caloporteur amené au moteur à combustion interne (10).

## Claims

1. Motor vehicle comprising an internal combustion engine (10) having an external gas recirculation system in the form of an exhaust gas recirculation line (42) which connects an exhaust gas line to an intake pipe (26), having a passenger compartment with a heating device (60) having a heating circuit of a fluid heat conveying medium, characterised by a heat exchanging device, by means of which heat can be supplied from the exhaust gas of the heating device (60) which has been recirculated by the exhaust gas recirculation line (42), wherein the heat can be fed, downstream of the internal combustion engine (10) and upstream of the heating device (60), directly or indirectly into the heating circuit.

2. Motor vehicle according to claim 1, characterised in that the heat exchanging device contains a heat exchanger (62) through which the recirculated exhaust gas can flow.

3. Motor vehicle according to claim 2, characterised in that the heat conveying medium of the heating circuit can flow directly through the heat exchanger (62).

4. Motor vehicle according to claim 2 or 3, characterised in that the internal combustion engine (10) comprises a coolant circuit and that the heat exchanger (62) can be integrated into the cooling circuit (x, 57).

5. Motor vehicle according to any one of the claims 2 to 4, characterised in that a valve (44) is disposed in the exhaust gas recirculation line (42) and the heat exchanger is disposed between the exhaust gas line (34) and the valve (44).

6. Motor vehicle according to any one of the claims 2 to 4, characterised in that a valve (44) is disposed in the exhaust gas recirculation line (42) and the heat exchanger is disposed between the valve and the intake pipe (26).

7. Motor vehicle according to claim 5 or 6, characterised in that an engine control (46) closes the valve when the internal combustion engine (10) is fully loaded.

8. Motor vehicle according to any one of the claims 2 to 7, characterised in that the heat exchanger (62) is flushed through during the counter flow process.

9. Motor vehicle according to any one of the preceding claims, characterised in that the internal combustion engine (10) is a direct-injection diesel engine.

10. Motor vehicle according to any one of the preceding claims, characterised in that the heat can be fed substantially completely into the heating circuit.

11. Motor vehicle according to any one of the preceding claims, characterised in that the heat exchanging device receives the heat conveying medium supplied to the internal combustion engine (10).
